# EUROPEAN PATENT SPECIFICATION

(11) **EP 2 805 903 B1**
(45) Date of publication and mention of the grant of the patent: **14.10.2015**
(21) Application number: 13168693.3
(22) Date of filing: 22.05.2013
(51) Int. Cl.: B65G 59/04, B65G 61/00, B65G 67/24

(54) **Method and device for unloading stacked objects, like boxes**
Verfahren und Vorrichtung zur Entladung von gestapelten Gegenständen, wie Schachteln
Procédé et dispositif de déchargement d'objets empilés, tels que des boîtes

(43) Date of publication of application: 26.11.2014
(73) Proprietor: Cartonmover B.V., 6902 AN Zevenaar (NL)
(72) Inventor: Groters, Antoon, 6902 AN Zevenaar (NL); Burghardt, Hans, 7025 CD Halle (NL)
(74) Representative: 't Jong, Bastiaan Jacob

(56) References cited:
- EP-B1- 1 885 636
- EP-B1- 1 893 512
- DE-A1- 19 719 748
- DE-A1-102004 033 437
- DE-U- 7 313 036

## Description

The invention relates to a device for unloading stacked objects, like boxes. In particular, the invention relates to a device, which is suitable to unload cardboard boxes from shipping containers. To efficiently utilize the space within a shipping container, cardboard boxes are stacked directly on the floor, without using pallets. When such a shipping container needs to be unloaded, one cannot use a forklift and has to handle each box by hand. This is very labor intensive and could cause, for example, back injuries to the people unloading the boxes.

DE19719748 discloses a device and a method for unloading stacked boxes within a container. This device comprises a support surface having two adjacent surface zones, wherein a first surface zone has rollers to move a box on it and wherein a second surface zone has rollers to move a box on it in a perpendicular direction. DE19719748 further discloses a gripper based on suction that is moveable over and parallel to the first surface zone to grip and move boxes one by one. DE19719748 further discloses an optical sensor for recognizing rows in a stack of boxes and for determining the contours of a box. Based on the contours of a box determined using the sensor, the gripper is aligned for gripping the box.

EP1885636 discloses a device for unloading stacked boxes from a shipping container. This device has the features of the preamble of claim 1 and comprises a movable arm, which is manually operable. A gripper is arranged at the free end of the arm and is used to grip cardboard boxes from the top side. With this device a few adjacent boxes are picked up together, are rotated and are then moved onto a conveyor belt, which transports the boxes away from the device. The boxes are still abutting each other, like they were in the stack of boxes inside the shipping container. The close distance of the boxes will lead to problems in the further chain of transport, for example at a palletizing machine.

The arm used in this device requires a lot of space to be able to pick up the boxes, to rotate the row of boxes and to place the boxes onto a conveyor. Furthermore, it takes time to perform all the movements with the arm, which reduces the unloading speed of the shipping container.

It is an object of the invention to reduce at least partially the above mentioned disadvantages and to provide an efficient device for unloading stacked objects.

This object is achieved with a device according to claim 1.

With the device according to the invention, the objects, like cardboard boxes, are pulled by the gripper means onto the support surface. Then the surface zones will move the objects over the support surface, while the position of the objects is monitored by the position detection means.

Because the second surface zone moves perpendicular to the first surface zone, the objects are pulled out of their row one by one. As a result the objects are spaced apart and transported away over the second surface zone.

As it is not necessary to rotate the row of boxes, like with the device according to the prior art, the device according to the invention could be designed more compact. For example, the width of the support surface could almost be the same as the inner width of a shipping container.

Preferably, the first and second surface zones are formed by a first and second conveyor. Such a conveyor could, for example, be a conveyor belt or a roller conveyor.

In a preferred embodiment of the device according to the invention the first conveyor is a roller conveyor and the gripper means comprise a first guide track arranged parallel and between the rollers for moving the gripper means in the axial direction of the rollers of the first conveyor.

By using a roller conveyor, it is possible to provide a guide track in between the rollers, wherein the guide track is somewhat lowered relative to the rollers. With this guide track it is possible to move the gripper means over the support surface to pick the objects from a stack and pull the gripped objects onto the support surface.

In a further preferred embodiment the gripper means further comprise a second guide track arranged on and perpendicular to the first guide track, for moving the gripper means in the transport direction of the first conveyor.

The second guide track ensures that the gripper can also be moved sideways, which is particularly relevant, when the support surface is almost the same width as the inner width of a shipping container. The support surface is then kept stationary, while the gripper will move sideways to pick all the objects from a layer of the stack.

Preferably, the gripper means could also be lifted over a short vertical distance relative to the support surface, such that gripped objects are easily pulled onto the support surface.

Furthermore, the gripper means could comprise an array of suction cups for suction to an object. The size of the objects can vary per shipping container and even within one single container. By using an array of suction cups, one can move the array towards the stack of objects. At least some of the cups will get a hold on the objects, which enable the gripping means to pull the objects onto the support surface.

It is preferred if the suction cups are each independently telescopic movable, such that the suction cups can adjust easily to an uneven surface of the objects.

The suction cups are preferably provided with low pressure. Each could be provided with a restriction to reduce the volume of air, when a cup is not pressed against an object and to ensure that sufficient low pressure is available for the cups which are in contact with an object.

The suction cups could also each be provided with a venturi, which provides for each and every cup a separate low pressure source.

In another preferred embodiment of the device according to the invention the position detection means comprise a scanning laser rangefinder. A scanning laser rangefinder is a device, which uses a laser beam and a sensor to measure the distance between the device and an object, which reflects the laser beam. The laser beam is scanned over a surface, for example by rotating the laser beam, which results in a number of distance measurements in relation to the rotation angle of the device. This provides a digital image of the surface in front of the scanning laser rangefinder. With this digital image it is thus possible to distinguish the objects and to determine the position of the objects on the supporting surface.

Preferably the scanning laser rangefinder is arranged adjacent the interface between the first and second surface zones. This will enable the device to track the objects, which are moved over the first surface zone and in perpendicular direction over the second surface zone.

It will even be possible to detect any objects in front of the support surface, which would even enable fully automated unloading of a shipping container.

A further preferred embodiment of the device according to the invention further comprises:
- a movable frame to which the support surface is height adjustable arranged;
- a third conveyor arranged between the movable frame and the second surface zone of the support surface for transporting away the unloaded objects.

With the movable frame it is possible to advance the support surface into a shipping container as it is getting emptier by the unloading of the objects. With the height adjustment it is possible to level the support surface with a top layer of objects at the stack. In this way the gripper means will take rows of objects of a single object height one at a time toward the support surface.

The third conveyor is used to further transport away the spaced apart objects, which are transported over the second surface zone.

The invention also relates to a method for unloading objects with a device according to the invention, which method comprises the steps of claim 9.

These and other features of the invention will be elucidated in conjunction with the accompanying drawings.
Figure 1 shows a perspective view of an embodiment of the device according to the invention.
Figure 2 shows a different perspective view of the device according to figure 1.
Figure 3 shows a perspective of the support surface of the device according to figure 1.
Figures 4A - 4C shows a top view of the support surface in different stages.

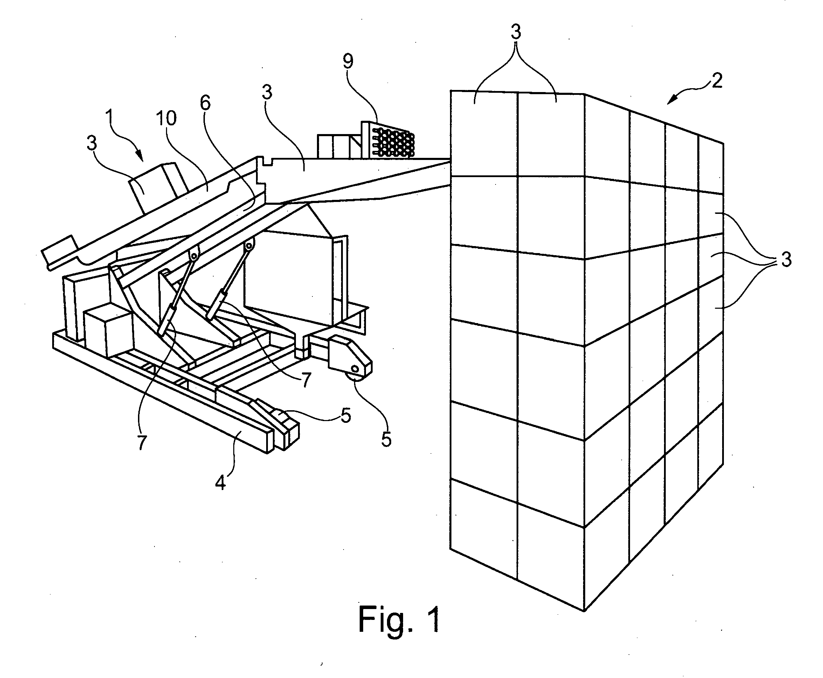

Figure 1 shows an embodiment of the device 1 according to the invention placed in front of a stack 2 of boxes 3.

The device 1 has a movable frame 4 having wheels 5. An arm 6 is arranged on the movable frame 4 and tiltable by hydraulic cylinders 7. A support surface 8 with a gripper 9 is arranged at the free end of the arm 6. A conveyor belt 10 is provided next to the arm 6 for transporting away unloaded boxes 3.

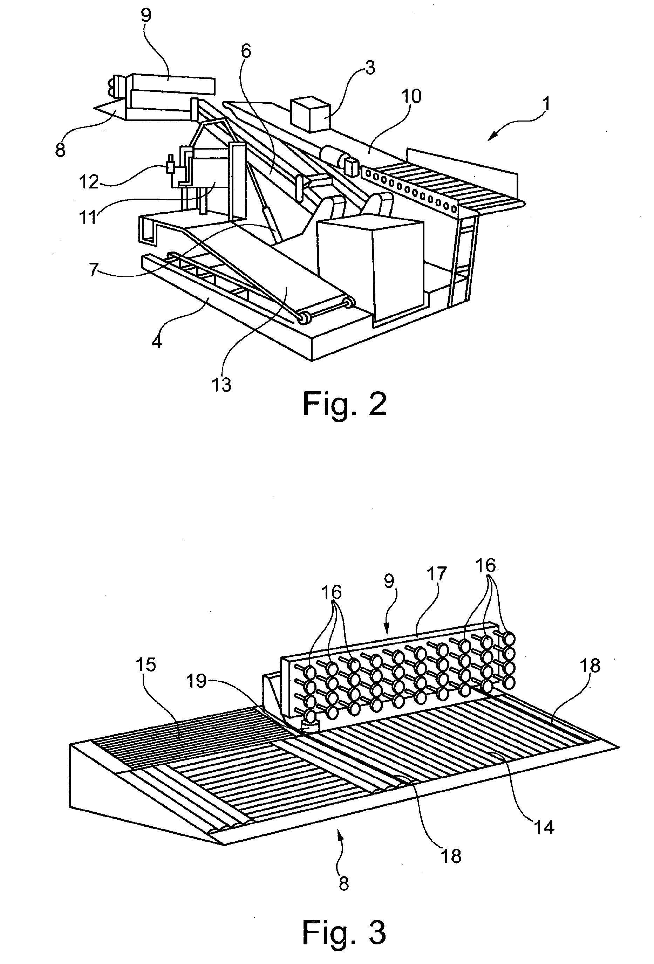

Figure 2 shows the device of figure 1 from behind. On the side of the arm 6 opposite of the conveyor belt 10, a seat 11 is provided for an operator. The seat 11 is provided with controls 12 for manually controlling the device 1.
Furthermore, a gangway 13 is provided behind the seat 11 for easy access of the operator.

Figure 3 shows the support surface 8 in more detail. The support surface 8 has two roller conveyors, first roller conveyor 14 in width direction of the support surface 8 and a second roller conveyor 15 extending in depth direction of the support surface 8. The first roller conveyor 14 defines the first surface zone of the support surface 8, while the second surface zone is defined by the second roller conveyor 15.

The gripper 9 has a plurality of suction cups 16 arranged in a matrix on a frame part 17. This frame part 17 is guided over guide rails 18, such that the gripper 9 can move over the support surface 8.

A scanning laser rangefinder 19 is arranged adjacent the interface between the first and second surface zones 14, 15.

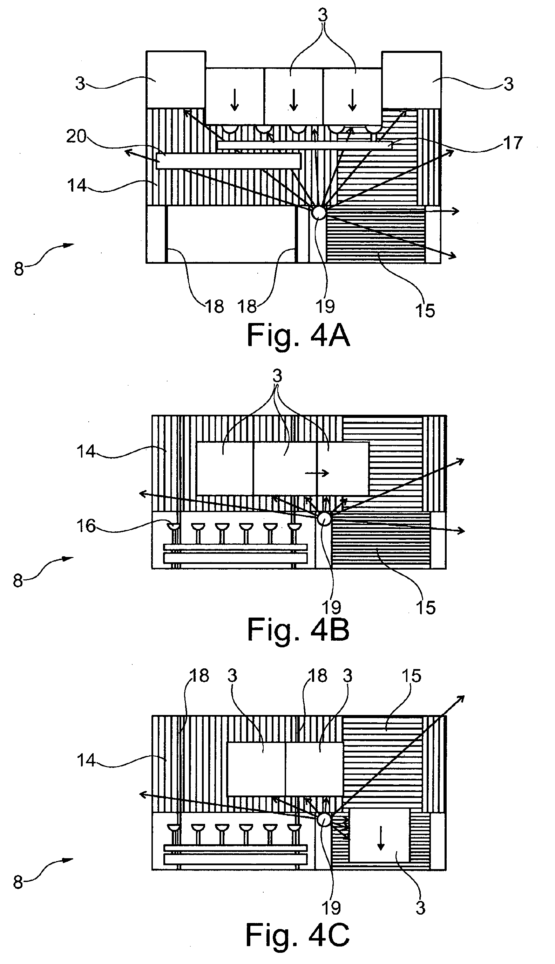

Figures 4A - 4C shows a top view of the support surface 8 in three different states.

In figure 4A the gripper 9 is moved over the support surface 8 via the guide rails 18. The frame part 17 is slidable arranged on a frame base 20, such that the gripper with suction cups 16 is movable both in depth direction as in width direction of the support surface 8.

In figure 4A the gripper 9 has gripped three boxes 3 from a layer and pulls these boxes 3 onto the support surface.

The scanning laser rangefinder 19 constantly measures in several direction the distance between the rangefinder 19 and the surrounding objects, such as the boxes 3 in order to determine the position of these boxes 3.

As shown in figure 4B, the gripper 9 has positioned the three boxes 3 mainly in the first surface zone 14 and has returned to the home position in the left bottom corner of the support surface 8.

With the measurements of the rangefinder 19, the controller (not shown) knows the position of the boxes 3 and controls the movement of the roller conveyor 14 such that the most right box 3 is moved into the second surface zone 15/

As soon as the right box 8 is within the second surface zone, the movement of the roller conveyor 14 is stopped and the movement of the roller conveyor 15 is started, such that the first box 3 is transported away (see figure 4C) toward the conveyor belt 10.

When the controller detects based on the measurements of the rangefinder 19, that the first box 3 has moved sufficiently far, the movement of the first roller conveyor 14 can be started again to bring the second box 3 within the second surface zone15.

In this way, the boxes 3 are unloaded from a stack of boxes and moved with a certain spacing onto the conveyor belt 10 for further processing.

It would be possible with the device according to the invention to unload boxes from a stack, wherein other boxes are stacked on top of the unloaded boxes. This will speed up the unloading process.

## Claims

1. Device (1) for unloading stacked objects (3), like boxes, which device comprises:
- a support surface (8) having at least two adjacent surface zones, wherein a first surface zone is movable in a first direction and a second surface zone is movable in a second direction substantially perpendicular to the first direction;
- gripper means (9) movable over and parallel to the support surface (8) for gripping and moving objects on the support surface;
**characterized by**
- position detection means (19) for detecting the position of objects in the at least two adjacent surface zones; and
- a controller for controlling at least the movement of the first surface zone and the second surface zone depending on position of the objects detected in the at least two surface zones.

2. Device (1) according to claim 1, wherein the first and second surface zones are formed by a first and second conveyor (14,15).

3. Device (1) according to claim 2, wherein the first conveyor (14) is a roller conveyor and wherein the gripper means (9) comprise a first guide track arranged parallel and between the rollers for moving the gripper means in the axial direction of the rollers of the first conveyor.

4. Device (1) according to claim 3, wherein the gripper means further comprise a second guide track arranged on and perpendicular to the first guide track, for moving the gripper means (9) in the transport direction of the first conveyor.

5. Device (1) according to any of the preceding claims, wherein the gripper means comprise an array of suction cups (16) for suction to an object.

6. Device (1) according to any of the preceding claims, wherein the position detection means comprise a scanning laser rangefinder (19).

7. Device (1) according to claim 6, wherein the scanning laser rangefinder (19) is arranged adjacent the interface between the first and second surface zones.

8. Device (1) according to any of the preceding claims, further comprising:
- a movable frame (4) to which the support surface (8) is height adjustable arranged;
- a third conveyor arranged between the movable frame (4) and the second surface zone of the support surface (8) for transporting away the unloaded objects (3).

9. Method for unloading objects (3) with a device (1) according to any of the preceding claims, which method comprises the steps of:
- moving the support surface (8) adjacent a row of objects;
**characterized by**
- moving the gripper means (9) over and parallel to the support surface (8) to grip the row of objects and moving the objects onto the first surface zone of the support surface;
- moving the first surface zone, such that the row of objects is moved towards the second surface zone,
while detecting the position of the objects; and
- controlling the movement of the first and second surface zones based on the detected positions, such that the objects are moved from the first surface zone onto the second surface zone and the objects are then moved over the second surface zone, while providing a spacing between the objects.

## Patentansprüche

1. Gerät (1) zum Abladen von gestapelten Objekten (3), wie Kisten, welches Gerät aufweist:
- eine Stützfläche (8), die mindestens zwei nebeneinander liegende Flächenzonen hat, wobei eine erste Flächenzone in eine erste Richtung beweglich ist und eine zweite Flächenzone in eine zweite Richtung beweglich ist, die im Wesentlichen senkrecht zu der ersten Richtung ist;
- Greifermittel (9), das über und parallel zu der Stützfläche (8) bewegbar ist, zum Greifen und Bewegen von Objekten auf der Stützfläche;
**gekennzeichnet durch**
- Positionserkennungsmittel (19) zum Erkennen der Position von Objekten in den mindestens zwei nebeneinander liegenden Flächenzonen; und
- ein Regler zum Regeln der Bewegung mindestens der ersten Flächenzone und der zweiten Flächenzone in Abhängigkeit der Position der in den mindestens zwei Flächenzonen erkannten Objekte.

2. Gerät (1) nach Anspruch 1, wobei die ersten und zweiten Flächenzonen von einer ersten und zweiten Fördereinrichtung (14, 15) gebildet werden.

3. Gerät (1) nach Anspruch 2, wobei die erste Fördereinrichtung (14) ein Rollenförderer ist und wobei das Greifermittel (9) eine erste Führungsschiene zum Bewegen des Greifermittels in die Axialrichtung der Rollen der ersten Fördereinrichtung aufweist, die parallel zu und zwischen den Rollen angeordnet ist.

4. Gerät (1) nach Anspruch 3, wobei das Greifermittel ferner eine zweite Führungsschiene zum Bewegen des Greifermittels (9) in die Transportrichtung der ersten Fördereinrichtung aufweist, die auf und senkrecht zu der ersten Führungsschiene angeordnet ist.

5. Gerät (1) nach einem der voranstehenden Ansprüche, wobei das Greifermittel ein Feld von Saugnäpfen (16) zum Festsaugen an einem Objekt aufweist

6. Gerät (1) nach einem der voranstehenden Ansprüche, wobei das Positionserkennungsmittel einen Laserabtastungs-Entfernungsmesser (19) aufweist.

7. Gerät (1) nach Anspruch 6, wobei der Laserabtastungs-Entfernungsmesser (19) neben der Schnittstelle zwischen den ersten und zweiten Flächenzonen angeordnet ist.

8. Gerät (1) nach einem der voranstehenden Ansprüche, ferner aufweisend:
- einen beweglichen Rahmen (4) an dem die Stützfläche (8) höhenverstellbar angeordnet ist;
- eine dritte Fördereinrichtung für den Abtransport der abgeladenen Objekte (3), die zwischen dem beweglichen Rahmen (4) und der zweiten Flächenzone der Stützfläche (8) angeordnet ist.

9. Verfahren zum Abladen von Objekten (3) mit einem Gerät (1) nach einem der voranstehenden Ansprüche, welches Verfahren die folgenden Schritte aufweist:
- Bewegen der Stützfläche (8) neben eine Reihe von Objekten; **gekennzeichnet durch**
- Bewegen des Greifermittels (9) über die und parallel zu der Stützfläche (8), um die Reihe von Objekten zu greifen und Bewegen der Objekte auf die erste Flächenzone der Stützfläche;
- Bewegen der ersten Flächenzone, so dass die Reihe von Objekten auf die zweite Flächenzone zu bewegt wird,
während des Erkennens der Position der Objekte; und
- Regeln der Bewegung der ersten und zweiten Flächenzonen auf Grundlage der erkannten Positionen, so dass die Objekte von der ersten Flächenzone auf die zweite Flächenzone bewegt werden und die Objekte anschließend über die zweite Flächenzone bewegt werden, während dafür einen Abstand zwischen den Objekten Sorge getragen wird.

## Revendications

1. Dispositif (1) pour décharger des objets empilés (3), comme des boîtes, lequel dispositif comprend :
- une surface de support (8) ayant au moins deux zones de surface adjacentes, dans lequel une première zone de surface est mobile dans une première direction et une seconde zone de surface est mobile dans une seconde direction sensiblement perpendiculairement à la première direction ;
- des moyens de préhension (9) mobiles au-dessus de la surface de support (8), parallèlement à celle-ci, pour saisir et déplacer des objets sur la surface de support ;
**caractérisé par** :
- des moyens de détection de position (19) pour détecter la position d'objets dans les au moins deux zones de surface adjacentes ; et
- un dispositif de commande pour commander au moins le mouvement de la première zone de surface et de la seconde zone de surface en fonction de la position des objets détectés dans les au moins deux zones de surface.

2. Dispositif (1) selon la revendication 1, dans lequel la première et la seconde zone de surface sont formées par un premier et un second transporteur (14, 15).

3. Dispositif (1) selon la revendication 2, dans lequel le premier transporteur (14) est un transporteur à rouleaux et dans lequel les moyens de préhension (9) comprennent une première piste de guidage aménagée parallèlement et entre les rouleaux pour déplacer les moyens de préhension dans la direction axiale des rouleaux du premier transporteur.

4. Dispositif (1) selon la revendication 3, dans lequel les moyens de préhension comprennent en outre une seconde piste de guidage aménagée sur la première piste de guidage et perpendiculairement à celle-ci pour déplacer les moyens de préhension (9) dans la direction de transport du premier transporteur.

5. Dispositif (1) selon l'une quelconque des revendications précédentes, dans lequel les moyens de préhension comprennent un réseau de ventouses (16) pour l'aspiration d'un objet.

6. Dispositif (1) selon l'une quelconque des revendications précédentes, dans lequel les moyens de détection de position comprennent un télémètre laser à balayage (19).

7. Dispositif (1) selon la revendication 6, dans lequel le télémètre laser à balayage (19) est aménagé adjacent à l'interface entre la première et la seconde zone de surface.

8. Dispositif (1) selon l'une quelconque des revendications précédentes, comprenant en outre :
- un châssis mobile (4) sur lequel la surface de support (8) est aménagée de manière à être réglable en hauteur ;
- un troisième transporteur aménagé entre le châssis mobile (4) et la seconde zone de surface de la surface de support (8) pour éloigner les objets déchargés (3).

9. Procédé de déchargement d'objets (3) avec un dispositif (1) selon l'une quelconque des revendications précédentes, lequel procédé comprend les étapes consistant à :
- déplacer la surface de support (8) de manière qu'elle soit adjacente à une rangée d'objets ;
**caractérisé en ce que** :
- l'on déplace les moyens de préhension (9) par-dessus la surface de support (8) et parallèlement à celle-ci pour saisir la rangée d'objets et déplacer les objets sur la première zone de surface de la surface de support ;
- l'on déplace la première zone de surface de sorte que la rangée d'objets soit déplacée vers la seconde zone de surface, tout en détectant la position des objets ; et
- l'on commande le mouvement de la première et de la seconde zone de surface sur la base des positions détectées de sorte que les objets soient déplacés de la première zone de surface sur la seconde zone de surface et que les objets soient ensuite déplacés par-dessus la seconde zone de surface tout en ménageant un espacement entre les objets.
